# EUROPÄISCHE PATENTSCHRIFT

(11) **EP 3 023 236 B1**
(45) Veröffentlichungstag und Bekanntmachung des Hinweises auf die Patenterteilung: **03.06.2020**
(21) Anmeldenummer: 15195422.9
(22) Anmeldetag: 19.11.2015
(51) Int. Cl.: B29C 70/46, B29C 70/48, B29C 70/08, B29C 70/54, B29C 70/44, B32B 5/24, B32B 15/04, B32B 15/14, B32B 3/08, B32B 3/26

(54) **VERFAHREN ZUR HERSTELLUNG VON FASERVERBUNDTEILEN UND EIN FASERVERBUNDTEIL UND VORPRODUKT**
METHOD FOR MANUFACTURING FIBRE COMPOSITES AND PRE-PRODUCT
PROCÉDÉ DE FABRICATION DE PIÈCES COMPOSITES EN FIBRES ET PRE-PRODUIT

(30) Priorität: 21.11.2014 DE 102014017200
(43) Veröffentlichungstag der Anmeldung: 25.05.2016
(73) Patentinhaber: Airbus Defence and Space GmbH, 85521 Ottobrunn (DE)
(72) Erfinder: Gajewski, Benjamin, 67169 Kallstadt (DE)
(74) Vertreter: Isarpatent

(56) Entgegenhaltungen:
- EP-A1- 2 781 343
- EP-A2- 0 904 930
- FR-A1- 2 870 861

## Beschreibung

Die Erfindung betrifft ein Verfahren zur Herstellung von Faserverbundteilen und ein Faserverbundteil.

Bei der Herstellung von Faserverbundbauteilen sollen die Verteilung des Matrixmaterials und die Imprägnierung des trockenen Fasermaterials möglichst schnell erfolgen. Bei Harzinjektionsverfahren in einer geschlossenen Kavität (z. B. beim RTM-Verfahren) kann die Infiltrationsgeschwindigkeit des Matrixmaterials durch eine Erhöhung des Injektionsdruckes gesteigert werden. Insbesondere bei der Herstellung von Bauteilen in Sandwich-Bauweise ist der maximale Injektionsdruck des Matrixmaterials jedoch durch die Werkstoffeigenschaften des Kernmaterials begrenzt. Bei einer zu hohen Einspritzgeschwindigkeit besteht die Gefahr, dass die eingelegten Fasermatten sich verschieben und so zum einen die Tragfähigkeit des Bauteils sinkt und sich eine Verstopfung der Kavität ergeben könnte.

Um eine weitere Steigerung der Infiltrationsgeschwindigkeit zu erreichen, muss es dem Matrixmaterial ermöglicht werden, sich möglichst ungehindert auszubreiten und das Fasermaterial zu durchtränken. Im Folgenden werden diesbezüglich verschiedene Ansätze vorgestellt. Es ist bekannt, dass sich durch Kanäle im Werkzeug, in dem das Faserverbundbauteil mit Matrixmaterial infiltriert wird, eine möglichst schnelle Verteilung des Matrixmaterials ermöglichen lässt. Das Matrixmaterial kann sich über die Kanäle schnell über die gesamte Bauteiloberfläche verteilen und dringt von diesen Kanälen aus in das Fasermaterial ein. Nachdem das Fasermaterial bereits vollkommen infiltriert ist, verbleibt bei diesem Verfahren Matrixmaterial in den Kanälen, härtet dort aus und verbleibt auf der Bauteiloberfläche. Diese Reinharzgebiete auf der Bauteiloberfläche sind meist unerwünscht. Es gibt verschiedene Möglichkeiten, um diesem unerwünschten Effekt entgegen zu wirken. Im Allgemeinen sehen diese Ansätze temporäre Fließkanäle im Werkzeug vor, welche während des Injektionsvorgangs eine schnelle Verteilung des Matrixmaterials zulassen, danach jedoch kein Verbleib von Matrixmaterial in ihnen ermöglichen. Dieses Vorgehen ist bspw. aus den Schriften US 6 406 659 B1 und DE 199 26 896 A1 bekannt. Dabei wird nach dem Hauptfüllprozess ein Schieber in den Fließkanal bewegt, und das dort vorhandene Material in die Form des Werkzeugs gedrückt.

Anstatt im Werkzeug, können, wie aus US 6 656 411 bekannt, bei der Herstellung von Sandwich-Bauteilen Verteilerkanäle ebenfalls im Kernmaterial vorgesehen werden. Das Matrixmaterial kann sich über die Kanäle schnell innerhalb des Bauteils verteilen und dringt von den Kanälen aus in das Fasermaterial ein.

Ein weiterer Ansatz, die Durchströmbarkeit des Werkzeugs während des Einspritzvorgangs, (auch Permeabilität) zu erhöhen, sieht vor, das formgebende Werkzeug während der Infiltration nicht komplett zuverschließen. Diese nicht-komplett geschlossene Stellung ist die Stellung, bei der die werkzeuginterne Kavität der Werkstücknegativform noch nicht erreicht ist. Vielmehr ist die Kavität um den nachfolgend beschriebenen Restspalt vergrößert. Diese Verfahren sind als advanced RTM (aRTM) oder Compression-RTM (C-RTM) bekannt. Während der Injektion des Matrixmaterials wird die formgebende Form nicht komplett geschlossen, sodass sich zwischen Fasermaterial und Form ein kleiner Spalt ergibt bzw. das Fasermaterial nicht so sehr kompaktiert wird. Die Kavität ist zu diesem Zeitpunkt jedoch bereits luftdicht verschlossen. Aufgrund des niedrigeren Kampaktierungsgrades bzw. des vorhandenen Spalts ist es dem Matrixmaterial möglich, sich schnell über die Bauteiloberfläche zu verteilen, von wo aus es in das Fasermaterial eindringt. Nachdem ausreichend Matrixmaterial in die Kavität injiziert wurde, wird die Form komplett geschlossen, sodass das Matrixmaterial restlos in das Fasermaterial gedrückt wird. Dieses Verfahren wird bspw. in der Schrift DE 101 57 655 B4 beschrieben. Mit dem Hintergrund ein Sandwich-Bauteil mit offenporigem Kernmaterial zu infiltrieren, sieht das Patent DE 100 07 373 C1 ein ähnliches Verfahren vor, wobei das Matrixmaterial in dem Spalt zwischen Form und Fasermaterial angeliert wird, bevor es in das Fasermaterial gedrückt wird.

Bei als aRTM oder C-RTM bekannten Verfahren besteht genauso wie bei den herkömmlichen RTM-Verfahren aufgrund der zunächst gewünscht mäßigen Kompaktierung des Fasermaterials weiter das Risiko, dass sich das Fasermaterial während der Verteilung des Matrixmaterials verschiebt, da das Matrixmaterial teilweise mit hohen Drücken injiziert wird.

Eine weitere Möglichkeit, eine schnelle Verteilung des Matrixmaterials zu realisieren, besteht darin, eine flächige Fließhilfe vorzusehen. Eine solche Fließhilfe ist ein textiles Halbzeug mit hoher Permeabilität. Häufig werden diese Fließhilfen als Geflecht, Gewirk, Gestrick, teilweise als Vlies oder andersartig ausgeführt. Solche flächigen Fließhilfen sind besonders aus dem Bereich der Harzinfusionsprozesse mit einseitig formgebendem Werkzeug (Resin Infusion unter Flexible Tooling, RIFT) bekannt.

Dokument DE 20 2008 012 572 U, welches sich mit der Herstellung von Sandwich-Verbundbauteilen durch Harzinfusionsverfahren beschäftigt, sieht vor, ein Kernmaterial beidseitig mit einer dränierenden Schicht zu umgeben, welche das Fließen des Harzes beim Injektionsvorgang verbessern soll. Die Verwendung einer flächigen Fließhilfe birgt den Nachteil, dass nach der Infiltration Matrixmaterial in ihr zurückbleibt und dort aushärtet. Die Fließhilfe stellt einen im Material enthaltenen Fremdkörper da, der u.a. aufgrund seiner Grenzschichten zum Harz und dem lokal geringen Faservolumengehalt eine Materialschwächung bewirken kann. Anders als bei RIFT-Verfahren, bei denen die flächige Fließhilfe nach Aushärtung des Matrixmaterials von der Bauteiloberfläche entfernt wird, ist dies nicht möglich, falls die Fließhilfe innerhalb des Bauteils positioniert wurde. Auch ergibt sich bei gleichen Festigkeitseigenschaften ein erhöhtes Bauteilgewicht.

Dokument EP 0 904 930 A2 offenbart ein Verfahren zur Herstellung eines Faserverbundteils, wobei in eine Kavität einer Form Faserverbundmaterial eingeführt wird sowie ein Mittel zur Aufnahme von einzuspritzendem Kunststoffmaterial. Dieses Mittel zur Aufnahme des einzuspritzenden Kunststoffmaterials umfasst ein flächiges Material bestehend aus Fasern, welches die Eigenschaft hat, das Kunststoffmaterial zu absorbieren

Dokument EP 2 781 343 A1 offenbart ein Verfahren zur Herstellung eines faserverstärkten thermoplastischen Kunststoffmaterials. Dabei wird ein Gegenstand aus thermoplastischem Kunststoffmaterial während des Verfahrens mit einer ersten, zweiten und dritten Glasfaserschicht versehen, wobei die erste Schicht einzuspritzendes Kunstharzmaterial aufnehmen soll, die zweite Schicht das aufgenommene Kunstharzmaterial auf der Oberfläche des zu verstärkenden Gegenstands verteilen soll, und die dritte Schicht dem zu verstärkenden Gegenstand durch den besonderen Aufbau der dritten Schicht Festigkeit und Widerstandsfähigkeit verleihen soll.

Es ist die Aufgabe der Erfindung ein verbessertes Verfahren der Füllung von Gussformen, insbesondere nach dem RTM-Verfahren bereitzustellen, bei dem bei einer hohen Füllgeschwindigkeit ein schädliches Verschieben von vorhandenen Fasern oder Matten oder dergleichen nicht stattfindet.

Diese Aufgabe wird mit dem Verfahren des Anspruchs 1 und einer Kombination aus einer Faserschicht und einem oder einer Mehrzahl von Abstandhaltern zur Herstellung eines entsprechenden Faserverbundteils gelöst. Vorteilhafte Ausführungsformen ergeben sich aus den abhängigen Ansprüchen.

Bei einem Verfahren zur Herstellung eines Faserverbundteils werden zumindest eine Faserschicht und ein Abstandshalter oder eine Mehrzahl von Abstandhaltern in eine Kavität einer Form eingebracht, so dass sich durch die Abstandhalter insbesondere benachbart zur Faserschicht zumindest ein Verteilkanal oder -bereich für das einzuspritzende Kunststoffmaterial ergibt, und das Kunststoffmaterial wird in die Form eingespritzt. Nachfolgend wird die Kavität der Form auf das Faserverbundteilmaß gebracht, wobei der oder die Abstandhalter sich verformen und in dem Verteilkanal oder -bereich enthaltenes Kunststoffmaterial in die Faserschicht fließt. Dadurch wird erreicht, dass sich das Kunststoffmaterial bestmöglich, also unter geringen Fließwiderstand in der Form verteilen kann. Es wird kein gesonderter Arbeitsschritt benötigt, um die Abstandhalter aus der Form herauszuholen. Dabei fallen bspw. die aus dem Stand der Technik bekannten Schieber zur Bereitstellung eines temporären Verteilkanals weg. Der Verteilkanal hat in der Summe mit den Abstandhaltern bevorzugt eine Dichte, die bis zu 30% der Dichte der Faserschicht vor dem Füllen der Faserschicht mit Kunststoff ausmacht. Das genannte Verformen der Abstandhalter kann auch ein Brechen der Abstandhalter umfassen. Insbesondere können die Abstandhalter Sollbruchstellen aufweisen, die durch eine entsprechende Belastung brechen. Zeitlich vor dem Einspritzen des Kunststoffmaterials und/oder während dem Einspritzen des Kunststoffmaterials in die Kavität der Form entspricht die Kavität insbesondere nicht dem Endmaß des herzustellenden Faserverbundteils.. Bevorzugt ist das Kunststoffmaterial ein aushärtbares Harz. Alternativ kann auch ein anderer Kunststoff, wie z.B. ein Elastomer verarbeitet werden.

Insbesondere weist die Form ein mehrere gegeneinander verfahrbare Teile umfassendes Werkzeug auf und die Form befindet sich während des Einspritzens des Harzes in die Kavität in einem teilgeschlossenen Zustand, bei dem es bereits bis auf einen geringen Restspalt geschlossen ist und die Form verfährt nach dem Beenden des Einspritzens in die geschlossene Stellung, bei der insbesondere die Werkzeugkavität dem herzustellenden Faserverbundteils entspricht. Die Verfahrbewegung kann durch einen automatischen Antrieb oder manuell erfolgen. Auf die beschriebene Art kann man ein bereits vorhandenes Werkzeug, bzw. eine entsprechende Form für das erfindungsgemäße Verfahren nutzen.

Bevorzugt wird bei einem RIFT-Verfahren eine formgebende Struktur vorgesehen, die ein Teil der Form oder Teil eines Einlageteils ist und in einem Spalt zwischen der formgebenden Struktur und einer Vakuumfolie sind eine Faserschicht und ein Abstandshalter oder eine Mehrzahl an Faserschichten oder der Abstandhalter angeordnet. Kunststoffmaterial wird in den Spalt eingespritzt und nachfolgend verformen, insbesondere komprimieren, sich über einen relativen Überdruck von dem Umgebungsdruck zu dem im Spalt herrschenden Druck die Abstandhalter. Auch so kann eine gleichmäßige Harzverteilung in der Form bewirkt werden.

Es kann insbesondere zwischen den Abstandhaltern und der Faserschicht eine Trennschicht verwendet. So kann erreicht werden, dass die Abstandhalter nicht Teil des fertigen Faserverbundbauteils sind. Faserverbundbauteile sind gerade im Flugzeugbereich festigkeitsoptimierte Komponenten, was bedeutet, dass integrierte Abstandhalter nicht kalkulierte oder nicht kalkulierbare Einflüsse bewirken könnten.

Insbesondere sind die Abstandshalter Teil einer flächigen Struktur, wie insbesondere einem Blatt oder einer Folie oder einem anderen flächigen Halbzeug, die dreidimensional derart verformt, geprägt, gestanzt, tiefgezogen und/oder geschnitten ist, so dass die Abstandshalter gegenüber einer Hauptebene der flächigen Struktur vortreten. Neben vielen anderen Ausführungsarten kann bspw. eine wellenartige Gestalt vorteilhaft sein. Die Ausführung als flächige Struktur macht es einfach die Abstandhalter zu positionieren. Es muss nämlich lediglich die Folie in das Werkzeug eingelegt werden. Bei der Harzinfusion auf einseitig formgebendem Werkzeug wird häufig eine flächige Fließhilfe auf die Bauteiloberfläche bzw. auf ein auf dieser positioniertem Abreißgewebe gelegt. Ein solcher Abstandhalter ist bevorzugt ein textiles Halbzeug mit hoher Permeabilität. Häufig werden diese Abstandhalter als Geflecht, Gewirk, Gestrick, teilweise als Vlies oder andersartig ausgeführt. Der Abstandhalter kann als eine Art Rost oder Gitter oder auch ein steifes Gewebe bzw. Gewirke oder Geflecht, welches sich nicht unter Vakuum stark kompaktieren lässt und z. B. aus den Werkstoffen Metall, Kunststoffen oder textilen Halbzeugen ausgeführt sein. Als Abstandhalter können Prepregs, also mit Kunststoffmaterial versehene Fasern, sein, die eine ausreichende Biegesteifigkeit aufweisen. Auch können mit einem Binder, wie z.B. einem Thermoplasten, versehene Fasern verwendet werden.

Alternativ oder zusätzlich können ein oder mehrere längliche Objekte, wie insbesondere Fäden, Fasern, Drähte,.. etc., in das Werkzeug eingebracht werden, wobei diese Objekte entweder radial vorstehende Bereiche aufweisen, die als Abstandshalter dienen. Oder diese Objekte können auch eine Verzwirbelung oder eine Verdrehung oder eine Spiralform aufweisen, so dass diese Objekte selbst als Abstandshalter dienen. Diese länglichen Objekte können gitterartig vernetzt sein. Einzelne Fasern können technisch einfach mit derartigen Verdickungen oder Verformungen versehen werden, so dass der Abstandhalter als ein kostengünstig herstellbares Halbzeug in das Werkzeug eingelegt wird. Durch die Längserstreckung der länglichen Objekte werden die Abstandhalter unmittelbar in den benötigten Abstand zueinander ausgerichtet. An den länglichen Objekten können radial lokal bzw. einseitig oder radial umlaufend Vorsprünge sein, so dass sich in etwa das Erscheinungsbild eines Stacheldrahts oder einer Perlenschnur ergibt.

Bei einem entsprechenden Verfahren werden insbesondere eine Mehrzahl einzelner Abstandselemente in das Werkzeug eingebracht und diese Abstandselemente sind entweder einzelne Körper, die eingelegt und/oder verklebt werden oder die Abstandshalter werden vor dem Einbringen der Faserschicht in das Werkzeug mit der Faserschicht verbunden. Hiermit wird nicht abschließend eine Anzahl unterschiedlicher Methoden der Herstellung beschrieben. Für spiralförmige Abstandhalter kann insbesondere der Begriff "spiralförmig" derart definiert sein, dass in einem elastisch nicht verspannten Zustand des Abstandhalters eine radiale Auslenkung besteht, die mehr als dem 5-fachen, bevorzugt dem 10-fachen seines Durchmessers entspricht und insbesondere besteht diese radiale Auslenkung in beiden zueinander senkrecht stehenden Radialrichtungen.

Insbesondere werden eine Mehrzahl einzelner Abstandhalter in den Verteilkanal oder -bereich eingebracht und diese Abstandhalter sind entweder einzelne oder getrennte Körper, die in die Form eingelegt werden und/oder sie werden an der im Werkzeug eingebrachten Faserschicht oder einer anderen Schicht angeklebt oder die Abstandshalter werden vor dem Einbringen in die Form mit der Faserschicht oder einer anderen Schicht oder einem Einlegeteil verbunden.

Bevorzugt werden pro 80 cm² der Verbundteiloberfläche zumindest ein Abstandshalter verwendet. Gerade wenn das die Abstandhalter umfassende Teil (wie z.B. eine Folie) so geformt ist, dass entweder eine weitgehend flächige Kontaktfläche zu der Faserschicht besteht oder ein Linienkontakt von dem Abstandhalter zu der Faserschicht besteht, kann diese Abstandhalterdichte ausreichen. Diese Abstandhalterdichte kann auch bei punktförmigen Kontakten von den Abstandhaltern zu der Faserschicht und/oder zu der Verbundteiloberfläche zum Einsatz kommen. Gerade wenn die Abstandhalter punktförmige Kontakte zu der Verbundteiloberfläche haben, kann eine größere Abstandhalterdichte vorteilhaft sein. So können mindestens 1 Abstandhalter pro cm² von der Abstandsoberfläche zu der Faserschicht bestehen, um so effektiv ein Verschieben des Fasermaterials zu verhindern.

Ein Faserverbundbauteil umfasst eine Faserschicht eines faserverstärkten Materials. Dabei hat die Faserschicht abzüglich des Harzes eine erste Dichte. Zumindest zu einer Seite der Faserschicht sind Abstandhalter angeordnet, die sich in einer elastischen Verspannung befinden. Die Abstandhalter würden nach einem Entfernen des Harzes und Lösen der elastischen Verspannung eine Schicht oder Bereiche bilden, die eine zweite Dichte aufweist und die zweite Dichte beträgt höchstens 25% der ersten Dichte. Wenn beispielsweise die Abstandhalter spiralförmig geformte Fasern sind, so lassen sich diese Fasern aus dem Harz herauslösen und so erkennen, wie ihre (elastisch) unverformte Geometrie ist. Hieraus lässt sich die Dicke dieser Schicht bestimmen und somit die genannten Dichteverhältnisse, die jeweils ohne den Harzanteil bestimmt werden. Die Schicht der reduzierten Dichte muss nicht durchgehend ausgebildet sein, sondern es können lediglich entsprechende Bereiche oder Zonen lokal ausgebildet sein. Wenn lokale Bereiche der Abstandhalter bestehen, so wird bei der Bestimmung der genannten Dichte die über die Abstandhalter aufgespannte Fläche betrachtet. Wenn in einem z.B. thermischen oder chemischen Verfahren das Harz entfernt wird so ist die ursprüngliche Form der Abstandhalter wieder erkennbar und erkennbar, ob das erfindungsgemäße Verfahren genutzt wurde. Auch kann erkennbar sein, wenn eine plastische Verformung von den Abstandhaltern vorliegt. Dies gilt insbesondere, wenn die Abstandhalter aus einem Schaum gefertigt sind und bei einem Röntgenverfahren gesehen wird, dass die einzelnen Zellen des Schaums verformt und dabei insbesondere quer zur Bauteiloberfläche komprimiert sind. Wenn eine Kompression der Abstandhalter von zumindest 40% in Faserverbundteilquerrichtung vorliegt, werden bevorzugt die erfindungsgemäßen Vorteile erreicht.

Im Folgenden werden bevorzugte Ausführungsbeispiele der Erfindung anhand von schematischen Darstellungen näher erläutert. Es zeigen:
- Fig. 1: eine schematische Ansicht eines zweiteiligen Werkzeugs in der teilgeschlossenen Stellung zum Zeitpunkt vor oder während des Einspritzen des Kunststoffs,
- Fig. 2: das Werkzeug gemäß Fig. 1 in der geschlossenen Stellung, bei dem die Werkzeugkavität der Geometrie des fertigen Faserverbundteils entspricht,
- Fig. 3: ein Halbschalenwerkzeug (RIFT) im Zustand vor oder während dem Einspritzen des Harzes,
- Fig. 4: das Werkzeug gemäß Fig. 3 im Zustand, dass das Harz eingespritzt ist und das Faserverbundteil hergestellt wurde,
- Fig. 5: eine schematische Ansicht des Aufbaus einer Sandwichkonstruktion vor dem Einspritzen des Harzes,
- Fig. 6: eine schematische Ansicht eines länglichen Abstandshalters mit lokalen kompressiblen Verdickungen,
- Fig. 7: eine schematische Ansicht eines spiralförmigen Abstandshalters,
- Fig. 8: zwei Ansichten zur Erläuterung der Herstellung eines Trägers von Abstandshaltern in einer alternativen Ausführungsform,
- Fig. 9: ein Abstandhalter aus einem Streckmetall,
- Fig. 10: eine Ansicht einer Geometrie eines Faserverbundteils mit Bereichen zur Aufnahme der Abstandhalter im Zustand vor oder während dem Einspritzvorgang,
- Fig. 11: das Faserverbundteil gemäß Fig. 10 in seiner Endgeometrie nach Verbringen des Werkzeugs in die geschlossene Stellung
- Fig. 12: eine Ansicht eines alternativen Herstellungsverfahrens mit einer Trennfolie und
- Fig. 13: das Herstellverfahren gemäß Fig. 12, bei dem das Werkzeug in seiner geschlossenen Stellung ist.

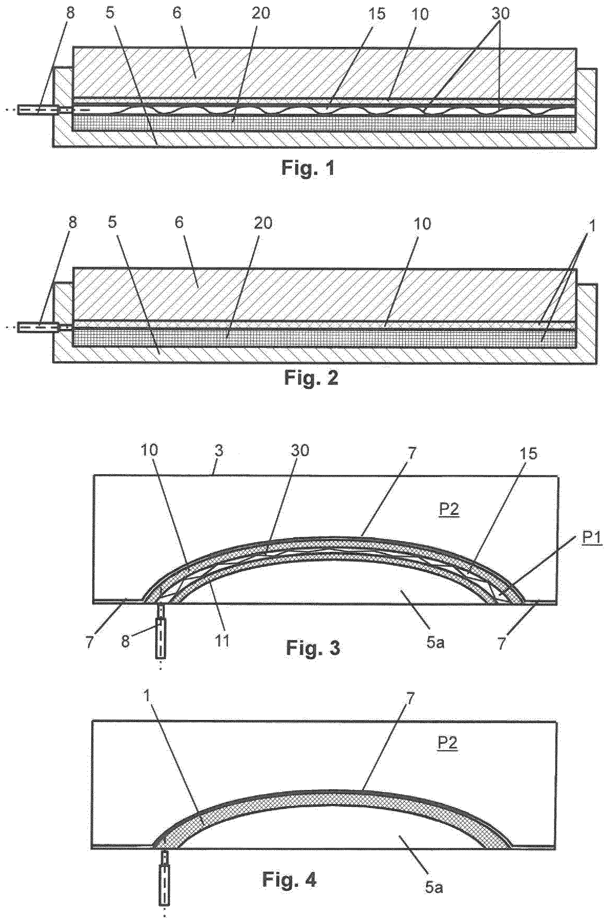

Der seitliche Schnitt der Fig. 1 zeigt den Aufbau eines Faserverbundteils, das in einem Werkzeug 5,6 aufgenommen ist, vor der Einbringung des Harzes. Das Werkzeug 5,6 umfasst ein Werkzeugunterteil 5 und ein Werkzeugoberteil 6, welches gegen das Werkzeugunterteil 5 verfahrbar ist. In der Kavität des Werkzeugs 5,6 ist ein Einlegeteil 20, wie z.B. ein Schaumstoffteil, enthalten. In der Kavität ist ferner eine oder mehrere Faserschicht(en) 10 enthalten und zwischen der Faserschicht 10 und dem Einlageteil 20 befindet sich eine Schicht eines Abstandhalters 30, die hier als eine Mehrzahl spiralförmiger Fasern ausgebildet ist, die über die Kavität bevorzugt gleichmäßig verteilt sind. Das Einlegeteil 20 ist optional und kann weggelassen werden. In letzterem Fall wären die Abstandhalter 30 in direktem Kontakt mit dem Werkzeugunterteil 5 oder zwischen zwei Faserschichten.

In dem in Fig. 1 gezeigten Zustand ist das Werkzeug 5,6 in der teilgeschlossenen Stellung, bei der die innere Kavität um einen Restspalt 15 größer ist, als das herzustellende Faserverbundteil. Dabei überbrücken die Abstandhalter 30 diesen Restspalt 15, so dass ein Abstand von der Faserschicht 10 zu dem Einlageteil 20 besteht. In diesem Zustand sind die Abstandhalter bevorzugt bereits etwas elastisch verformt, um einen Druck auf die Faserschicht auszuüben. Nach der Infiltration können sie sich zudem auch plastisch verformen. Wenn nun über einen Einspritzpunkt 8 das Harz eingespritzt wird, so kann es sich in dem Restspalt 15 ausbreiten. Da in der Faserschicht 10 die Fasern relativ nah beieinander liegen, stellt die Faserschicht 10 einen relativ hohen Strömungswiderstand dar. Da, wie später noch im Detail erläutert wird, in dem Restspalt 15 bevorzugt nur vereinzelt die Abstandhalter 30 vorgesehen sind, ist im Restspalt 15 ein Ausbreiten des Harzes leichter möglich. Wenn die Kavität des Werkzeugs 5,6 ausreichend mit Harz gefüllt ist, so wird die Harzzufuhr beendet und das Werkzeug 5,6 in die komplett geschlossene Stellung verfahren, die in Fig. 2 gezeigt ist. Die Abstandhalter 30 verformen sich dabei elastisch. Auch ist es möglich, dass einzelne oder mehrere der Abstandhalter 30 dabei brechen. Auch ist es möglich, dass sich das Einlageteil 20 und/oder die Faserschicht 10 sich plastisch und/oder elastisch durch den Kontakt mit den Abstandhaltern 30 verformt und/oder sich die Abstandhalter 30 plastisch verformen. Dabei schließt sich der Restspalt 15. Die eingespritzte Harzmenge wurde so bemessen, dass sie ausreicht die Faserschicht komplett oder zumindest weitgehend zu durchdringen. So fließt das Harz beim Komplett-Schließen des Werkzeugs aus dem Restspalt 15 in Abschnitte der Faserschicht, die noch nicht benetzt oder durchtränkt waren. Das Harz wird über eine gewünschte Druck- und Temperaturführung ausgehärtet.

Da im beschriebenen Verfahren das Kunststoffmaterial im Vergleich zum Stand der Technik nur deutlich weniger die Faserschicht 10 durchströmen muss, sind die Strömungs- /Druck- bzw. Kraftbelastungen auf die Faserschicht 10 deutlich reduziert. Bei herkömmlich bekannten Ausführungsformen trat das Problem auf, dass die Faserschicht durch das Durchströmen sich verschieben konnte und die konstruktiv vorgesehene Faserverteilung im Faserverbundteil teilweise nicht sichergestellt werden konnte. Dieses Problem wurde weitgehend entschärft bzw. gelöst. Zudem kann die Form des Werkzeugs schneller gefüllt werden. Dies ist gerade bei großen Bauteilen ein wesentlicher Vorteil.

Auch musste bei den bestehenden Infusions- bzw. Infiltrationsverfahren mit hohen Drücken gearbeitet werden, die teilweise größer als 25 bar waren, um so die Faserschicht in angemessener Zeit durchdringen zu können. Durch die beschriebene Vergrößerung des Strömungsquerschnitts innerhalb des Restspalts ist es möglich, die Drücke wesentlich zu senken, auf Bereiche von 2 bis 3 bar oder bis bspw. 5 bar.

Bereits in dem Zustand, dass das Werkzeug in der teilgeschlossenen Stellung ist, ist es bevorzugt hermetisch geschlossen. Vor dem Einspritzen des Harzes wird die Werkzeugkavität bevorzugt evakuiert, um ein gleichmäßiges und komplettes Füllen der Kavität mit Harz zu ermöglichen und insbesondere Lufteinschlüsse zu vermeiden.

Die Verwendung von Abstandhaltern 30 bei dem Einspritzvorgang ist auch bei dem RIFT-Verfahren (RIFT= Resin infusion with flexible tooling) möglich, wie dies mit den Figuren 3 und 4 erläutert wird. Das RIFT-Verfahren ist ein Infusionsprozess mit einem einseitig formgebendem Werkzeug.

Fig. 3 zeigt entsprechend ein Werkzeug mit einer unteren Werkzeugform 5a. Alternativ kann das Teil 5a ein Einlegeteil wie z.B. ein Schaumstoffkern sein, der umspritzt werden soll und so ein Bestandteil des Faserverbundteils wird. Auf der Werkzeugform 5a oder dem Schaumstoffkern 5a liegt eine erste Faserschicht 11, dann folgt eine Schicht von Abstandhaltern 30 und darüber eine zweite Faserschicht 10. Oberhalb dieser Packung liegt eine Vakuumfolie 7. Der beschriebene Aufbau ist innerhalb einer druckdichten Kammer 3. Über nicht dargestellte Pneumatikvorrichtungen kann der Druck P1 unterhalb der Vakuumfolie 7, wie auch der Druck P2 außerhalb bzw. oberhalb der Vakuumfolie 7 und innerhalb der Kammer 3 gezielt eingestellt werden.

Die in Bezug auf Fig. 3 und 4 beschriebenen Abstandhalter 30 entsprechen prinzipiell den vorstehend beschriebenen Abstandhaltern. Ebenso ist hier vorteilhaft, dass durch die Abstandhalter 30 ein Verteilkanal oder - bereich 15 aufgespannt wird. Dabei haben die Abstandhalter 30 eine ausreichende Festigkeit, dass sie während des Befüllungsvorgangs in Faserverbundteilnormalrichtung einen gewissen Druck auf die Faserschicht oder Faserschichten ausüben können, so dass die Faserschicht(en) sich nicht verschieben. Bei einer Bewirkung eines erhöhten Drucks auf die Abstandhalter verformen sie sich jedoch, so dass der Verteilkanal oder -bereich 15 zusammengedrückt wird und das Harz sich - wie bereits beschrieben - in den Faserschichten 10 und/oder 11 verteilen kann.

Vor der Befüllung der Kavität zwischen der Vakuumfolie 7 und dem Werkzeugunterteil 5a mit Harz werden in bevorzugter Weise die mit P1 und P2 bezeichneten Bereiche evakuiert. Dabei kann der Unterdruck P2 weniger stark sein als P1, so dass die Vakuumfolie sich an die Faserschicht 10 anlegt und ein leichter Druck auf die Abstandhalter 30 ausgeübt wird. Zu diesem Zeitpunkt kann in den Bereich, der sich aus den Schichten 10, 15 und 11 ergibt, eingespritzt werden. Nach der ausreichenden Harzfüllung wird die Harzzufuhr unterbrochen und der Druck P2 wird erhöht. Hier kann beispielsweise ein Druck von 6 bis 8 bar verwendet werden. Durch den auf die Vakuumfolie 7 und somit auf die Abstandhalter 30 bewirkten Druck verformen sich die Abstandhalter 30, so dass der Bereich 15 zusammengedrückt wird. Dort vorhandenes Harz wird so in Abschnitte der Faserschichten 10 und 11 geleitet, die noch nicht ausreichend durchtränkt waren. Nach dem Aushärten des Harzes kann die Vakuumfolie 7 entfernt werden. Sofern das Teil 5a ein Werkzeugunterteil war, wird dieses von dem fertigen Faserverbundteil 1 entfernt. Sofern das Teil 5a ein Einlegeteil war, so haftet dies fest über das ausgehärtete Harz an der Faserschicht 11 und ist integratives Teil des Faserverbundteils 1.

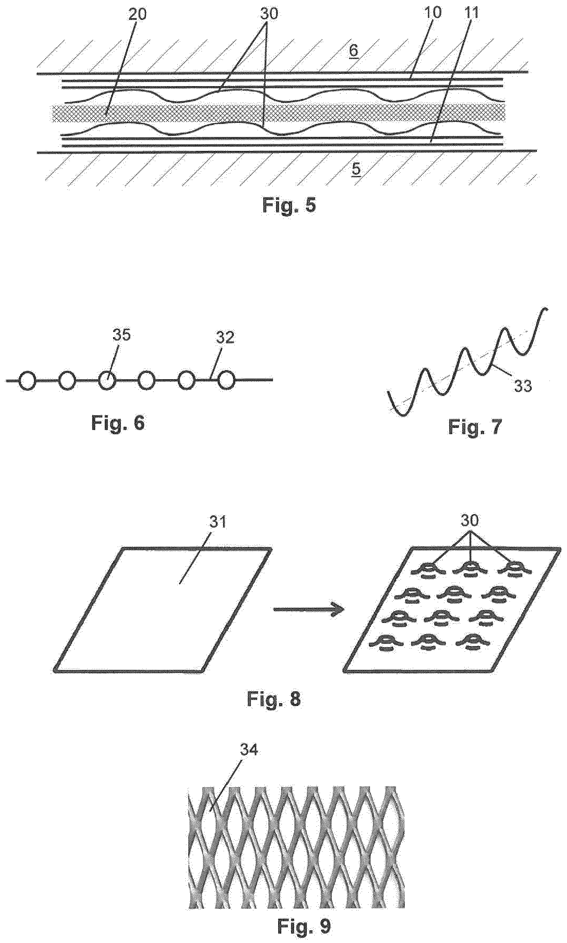

Gemäß Fig. 3 liegt die Schicht der Abstandhalter 30 zwischen den Faserschichten 10 und 11. Durch den Schritt des Zusammendrückens der Abstandhalter ist hierdurch eine kombinierte Faserverbundschicht entstanden. Vielfache Alternativen sind möglich. So kann in manchen alternativen Ausführungsformen wahlweise auf die Faserschicht 10 oder 11 verzichtet werden. In einer weiteren Ausführungsform gemäß Fig. 5 ist ein Aufbau für die Herstellung einer Sandwichkonstruktion gezeigt, mit außenliegenden faserverstärkten Schichten 10 und 11 und einem stabilisierenden Kern, der sich aus einem Einlageteil 20, wie z.B. einer Schaumstoffplatte, ergibt. Jeweils zwischen den Schichten 10 und 11 und dem Einlageteil sind Abstandhalter 30 vorgesehen, die den Verteilkanal 15 bilden.

Die Fig. 3 und 4 sind auch geeignet, eine weitere alternative Ausführungsform zu beschreiben. In diesem Fall befindet sich oberhalb der Vakuumfolie 7 eine Werkzeughälfte (in der Figur nicht mit Bezugszeichen bezeichnet). Diese Werkzeughälfte begrenzt die Maximallage, mit der die Vakuumfolie 7 sich nach oben ausdehnen kann. Auf diese Art wird der maximale Verbundteilquerschnitt begrenzt. Zum Zeitpunkt der Infiltration kann diese (in Fig. 3 und 4 nicht dargestellte) Werkzeughälfte bereits Kontakt zur Vakuumfolie 7 haben und insbesondere durch ihre Ausführung und Position bereits eine elastische Verformung der Abstandhalter 30 hervorrufen, sodass diese dadurch die bereits erläuterte Haltekraft auf die Faserschicht(en) 10,11 ausüben. Über die beschriebene Druckführung der Drücke P1 und P2 kann eine gleichmäßige Bauteildickenverteilung erreicht oder zumindest unterstützt werden. Die Verwendung dieser nicht dargestellten, oberseitigen Werkzeughälfte erlaubt es, Infiltrationsdrücke zu realisieren, wie sie von Prozessen mit beidseitig formgebendem Werkzeug bekannt sind. Die oberseitige Werkzeughälfte muss dabei nicht den Fertigungstoleranzen und der Bauart eines formgebenden Werkzeugs entsprechen.

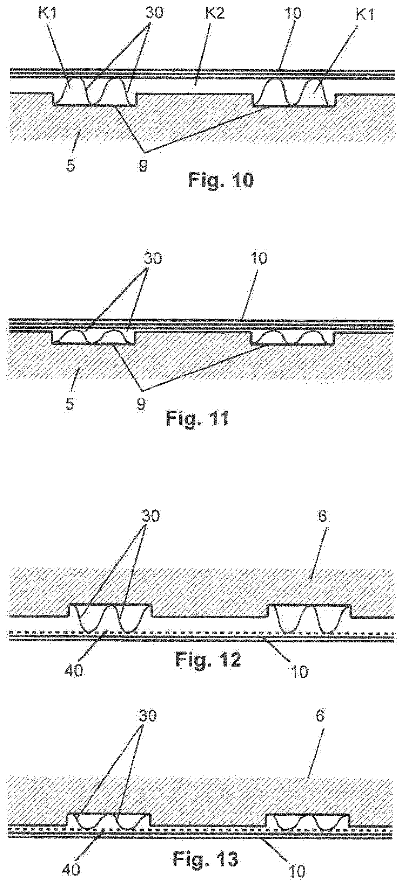

Fig. 10 und 11 zeigen eine weitere alternative Ausführungsform mit einem Werkzeugunterteil 5 oder einem Einlageteil und darin als Vertiefungen angeformten Bereichen oder Ausnehmungen 9. Bei dieser Ausführungsform sind die Abstandhalter nicht flächig, bzw. als eine Schicht angeordnet, sondern lokal bereichsweise und bevorzugt in den Ausnehmungen 9 vorgesehen. So ergibt sich ein Bereich K2, der einen Spalt aufweist, der frei von Abstandhaltern ist. Dieser Spalt K2 kann konstruktiv gezielt als Harzkanal vorgesehen sein. Bei alternativen Ausführungsformen können auch die Ausnehmungen 9 als Fließkanäle für das Harz vorgesehen werden. Gerade wenn die Abstandhalter dünn oder flach sind, bieten sie einen geringen Fließwiderstand, so dass aufgrund der Ausnehmungen 9 ein Verteilkanal K1 bereitgestellt wird. Wie bereits beschrieben, wird auch bei dieser Ausführungsform nach dem ausreichenden Füllen der Form ein Druck normal zur Faserverbundteiloberfläche ausgeübt, so dass die Abstandhalter komprimiert werden, so dass sich im fertigen Bauteil der in Fig. 11 gezeigte Querschnitt ergibt.

In Fig. 12 und 13 ist eine weitere alternative Ausführungsform gezeigt. Hier ist zwischen einem Werkzeugoberteil 6 bzw. Abstandhaltern 30 und einer Faserschicht 10, die durch zwei parallele Linien symbolisiert ist, eine Trennfolie 40 vorgesehen. Die Trennfolie 40 kann bspw. eine perforierte Kunststofffolie mit Löchern der Durchmessergröße von 0,5 - 1 mm in Abständen von ca. 10 mm sein. Alternativ kann die Trennfolie 40 ein grob gewebtes Teflongewebe sein, das zwischen den Fasern perforationsartige Öffnungen aufweist. Auch kann die Trennfolie 40 ein Abreißgewebe sein. Ein Abreißgewebe ist ein Gewebe dessen Fasern antihaftbeschichtet sind. Wenn eine derartige Schicht an der Außenseite eines Bauteils liegt, so kann sie einfach abgerissen werden und deren Gegenform zeichnet sich auf der Bauteiloberfläche ab. Aufgrund ihrer Rauigkeit und Struktur eignet sich ein derartiges Bauteil insbesondere für einen nachfolgenden Klebeprozess. In dem gemäß Fig. 12 oberhalb der Trennfolie 40 liegenden Bereich wird das Harz eingespritzt und es fließt durch die Öffnungen der Trennfolie 40 in den Faserschicht 10. Die Abstandhalter 30 haben die Aufgabe sowohl die Trennfolie 40, wie auch die Faserschicht 10 während dem Einspritzvorgang örtlich zu fixieren. Ein Vorteil dieser Ausführungsform kann insbesondere sein, dass die Abstandhalter nicht Teil des fertigen Faserverbundteils sind. Bei der Harzinfusion auf ein einseitig formgebendes Werkzeug kann insbesondere ein flächiger oder punktueller Abstandhalter auf die Bauteiloberfläche bzw. auf ein auf dieser positioniertem Abreißgewebe oder Trennfolie gelegt werden. Dies kann ein textiles Halbzeug mit hoher Permeabilität sein. Häufig werden diese Fließhilfen als Geflecht, Gewirk, Gestrick, teilweise als Vlies oder andersartig ausgeführt.

Als Abstandhalter 30 können einzelne Objekte in den Spalt 15 eingelegt sein. Sie können aus einem kompressiblen Schaum ausreichender Härte sein, dass ein Druck gegen das Verschieben der Faserschichten 10, 11 erreicht wird und gleichzeitig ausreichender Flexibilität, so dass sie sich bei einer Druckerhöhung zum Schließen des Restspalts bzw. Verteilkanals 15 verformen können. Die Durchmesser und/oder die Dicke der Abstandhalter kann der Spaltdicke entsprechen. Bevorzugt sind die Abstandhalter in Spaltdickenrichtung etwas größer als der Spalt, so dass die Abstandhalter während der Infiltration schon elastisch zusammengedrückt sind und so einen Druck auf das Fasermaterial ausüben, um dessen Verschieben zu verhindern. Die Dichte der Abstandhalter beträgt bei der beschriebenen Ausführungsform 1 Abstandhalter pro 10 cm2. Vorteilhaft ist insbesondere eine Abstandhalterdichte im Bereich von 1 Stück pro 1 bis 80 cm².

Auch kann gemäß Fig. 6 ein Träger 32 für Abstandhalter 35 verwendet werden, der länglich oder flächig ist. In diesem Sinne zeigt Fig. 6 eine Faser, Faden oder Draht 32 an dem einige Objekte 35 angeordnet sind. Diese Objekte können Kugeln, Klebepunkte oder dergleichen sein, die gegenüber dem Objekt 32 radial vorstehen. Dieses "Vorstehen" kann radial umlaufend weitgehend gleichmäßig sein oder in eine oder mehrere bevorzugte Richtungen ausgerichtet sein, so dass die Abstandhalter der Form eines Stacheldrahts (nicht gezeigt) ähneln. Diese Objekte sind, wie vorstehend beschrieben, kompressibel.

Fig. 7 zeigt eine Ausführungsform 33 eines Abstandhalters, bei der ein Draht oder eine Faser spiralförmig ist. Dies kann insbesondere eine Kunststoff- oder Glasfaser, Kohlefaser, Aramidfaser, Keramikfaser, Borfaser, Basaltfaser, Naturfaser oder Nylonfaser sein. Wenn eine Faser verwendet wird, die spröde ist, so kann ein Brechen der Faser konstruktiv vorgesehen sein. Eine ausreichende Steifigkeit sorgt dafür, dass sich im Werkzeug in der teilgeschlossenen Stellung ein ausreichender Druck auf die Faserschicht aufbaut. Diese spiralförmigen Abstandhalter 33 können bereits ein Teil der Faserschicht 10 oder 11 sein. So können bspw. bis zu 10% der Fasern der Faserschicht spiralförmig sein und die restlichen Fasern sind langgestreckt, um so für eine gerichtete Tragfähigkeit des Bauteils zu sorgen. Die Fasern, die den Abstandhalter bilden, liegen insbesondere an der Außenseite der Faserschicht 10, die zum Verteilkanal 15 gerichtet ist.

In Fig. 8 ist eine weitere Alternative gezeigt, die ringförmige Verformungen aufweist. Die Ringform erhöht im Vergleich zu Fig. 9 die Formstabilität der sich so ergebenden Abstandhalter 30. Mittig in den Abstandhaltern 30 kann ein Teil der Folie ausgestanzt sein, um einen Harzfluss von der einen Seite zur anderen Seite der Folie zu erlauben. Auch können auf der nicht verformten Grundfläche der Folie zu diesem Zweck Ausstanzungen vorgesehen sein.

Die Ausführung der Fig. 9 wird als Streckmetall oder Streckgeometrie bezeichnet und entsteht, indem man eine Vielzahl von Schlitzen in jeweils zueinander versetzten Reihen an einem Blech oder einer Folie anordnet und dann quer zur Schlitzlängsrichtung dehnt. Dabei ergibt sich durch Verwindungen eine dreidimensionale Struktur, die in den Werkzeugspalt eingelegt werden kann und so als Abstandhalter dient. Falls gewünscht können Prägungen die Abstandshalterhöhen erhöhen. Auch hier liegt die beschriebene ausreichende Verformbarkeit vor.

Der Schaum des Einlageteils 20 kann bevorzugt ein definierter, niedriger, fein- und/oder geschlossenzelliger Schaum mit bevorzugt einer homogenen Dichte. Es eignen sich Polyurethanschäume, da sie eine hohe Härte aufweisen. Ferner eignen sich insbesondere Polyvinylchlorid (PVC)- Polypropylen(PP)- Polyethylen(PE)-, Polyethylenterephtalat (PET)- Polybutylenterephtalat (PBT)-, Polystylrol (PS)-, expandierte Polystyrol (EPS)- oder vernetzte Polystryrol (XPS)-Schäume. Bevorzugt wird ein geschlossenzelliger Schaum verwendet, um zu vermeiden, dass der Schaum sich mit dem Harz füllt, was neben den Materialkosten auch das Bauteilgewicht erhöht.

Als Kunststoffmaterial kann ein Thermoplast oder ein Harz verwendet werden. Als Harz kommt bevorzugt ein Epoxidharz oder ein Harz auf Vinylesterbasis oder dergleichen zum Einsatz.

Die Dicke der Decklage, also der Faserschicht 10, kann bspw. 2 mm betragen, wobei bevorzugt Dickenbereiche von 0,2 mm bis 20 mm verwendet werden können. Der beschriebene Spalt 15, durch den das Harz einfließen kann, also die Wegdifferenz des Werkzeugs zwischen der teilgeschlossenen und der geschlossenen Stellung, beträgt bevorzugt 0,1 bis 3 mm, wobei bei großen Bauteilen der Spalt bis zu 10 mm betragen kann. Insbesondere ist eine Spaltdicke von 0,2 bis 3 mm vorteilhaft.

### Bezugszeichen:

- 1: Faserverbundteil
- 3: Kammer
- 5: Werkzeugunterteil
- 5a: Einlageteil oder Werkzeugunterteil
- 6: Werkzeugoberteil
- 7: Vakuumfolie
- 8: Einspritzpunkt
- 9: Ausnehmungen
- 10: Faserschicht
- 11: Faserschicht
- 15: Restspalt, Verteilkanal
- 20: Einlageteil, z.B. Schaumstoffkörper
- 30: Abstandhalter
- 31: Folie
- 32: längliches Objekt, Faser, Faden, etc.
- 33: Spirale
- 34: gitterförmiges Objekt
- 35: Kugel, Klebepunkt, etc.
- 40: Trennschicht, Trennfolie
- K1, K2: Fließkanäle

## Patentansprüche

1. Verfahren zur Herstellung eines Faserverbundteils (1), wobei zumindest eine Faserschicht (10,11) und ein Abstandhalter (30, 33-35) oder eine Mehrzahl von Abstandhaltern (30, 33-35) in eine Kavität einer Form (5,6,7) eingebracht werden, so dass sich durch die Abstandhalter (30, 33-35) insbesondere benachbart zur Faserschicht (10) zumindest ein Verteilkanal oder -bereich (15) für das einzuspritzende Kunststoffmaterial ergibt, und das Kunststoffmaterial in die Form (5,6,7) eingespritzt wird, und nachfolgend die Kavität der Form auf das Faserverbundteilmaß gebracht wird, wobei der oder die Abstandhalter (30, 33-35) sich verformen und/oder brechen und in dem Verteilkanal oder -bereich (15) enthaltenes Kunststoffmaterial in die Faserschicht (10,11) fließt,
wobei ein oder mehrere längliche Objekte (32) in der Form von Fäden, Fasern oder Drähten in die Form (5,5a,6,7) eingebracht werden, wobei diese Objekte (32) entweder radial vorstehende Bereiche aufweisen, die als Abstandhalter (30) dienen, oder wobei diese Objekte eine Verzwirbelung oder eine Verdrehung oder eine Spiralform aufweisen, so dass diese Objekte als Abstandhalter (30) dienen.

2. Verfahren gemäß Anspruch 1, wobei die Form (5,6) ein mehrere gegeneinander verfahrbare Teile umfassendes Werkzeug aufweist und die Form (5, 6) sich während des Einspritzens des Kunststoffmaterials in die Kavität in einem teilgeschlossenen Zustand befindet, bei dem es bis auf einen geringen Restspalt geschlossen ist und die Form (5, 6) nach dem Beenden des Einspritzens in die geschlossene Stellung verfährt, bei der insbesondere die Werkzeugkavität dem herzustellenden Faserverbundteil (1) entspricht.

3. Verfahren gemäß Anspruch 1, wobei zu einer Seite der Faserschicht (10) eine formgebende Struktur (5a) vorgesehen ist, die ein Teil der Form oder Teil eines Einlageteils (5a) ist und in einem Spalt (15) zwischen der formgebenden Struktur und einer Vakuumfolie (7) die Faserschicht (10,11) und der Abstandhalter oder die Mehrzahl der Abstandhaltern (30, 33-35) angeordnet sind, und Kunststoffmaterial in den Spalt (15) eingespritzt wird und nachfolgend über einen relativen Überdruck von dem Umgebungsdruck (P2) zu dem im Spalt herrschenden Druck (P1) die Abstandhalter (30) sich verformen, insbesondere komprimieren, und so insbesondere ein Fließen des Kunststoffmaterials zur gleichmäßigen Kunststoffverteilung bewirkt wird.

4. Verfahren gemäß Anspruch 3, **dadurch gekennzeichnet, dass** zwischen den Abstandhaltern und der Faserschicht (10) eine Trennschicht (40) verwendet wird.

5. Verfahren gemäß einem der vorangegangenen Ansprüche, **dadurch gekennzeichnet, dass** die Abstandhalter (30) Teil einer flächigen Struktur, wie insbesondere einem Blatt oder einer Folie (31), sind, die dreidimensional derart verformt, geprägt, gestanzt, tiefgezogen und/oder geschnitten ist, so dass die Abstandhalter (30) gegenüber einer Hauptebene der flächigen Struktur (31) vortreten.

6. Verfahren gemäß einem der vorangegangenen Ansprüche, **dadurch gekennzeichnet, dass** der zumindest eine Abstandhalter (30) spiralförmig ist, wobei insbesondere spiralförmig derart definiert ist, dass über eine axiale Länge des Abstandhalters von 3 cm in einem elastisch nicht verspannten Zustand der Abstandhalter eine radiale Auslenkung hat, die mehr als dem 5-fachen, bevorzugt dem 10-fachen seines Durchmessers entspricht und insbesondere diese radiale Auslenkung in beiden zueinander senkrecht stehenden Radialausrichtungen besteht.

7. Verfahren gemäß einem der vorangegangenen Ansprüche, **dadurch gekennzeichnet, dass** eine Mehrzahl einzelner Abstandhalter (30) in den Verteilkanal oder -bereich (15) eingebracht werden und diese Abstandhalter (30) entweder einzelne oder getrennte Körper sind, die in die Form eingelegt und/oder an der im Werkzeug eingebrachten Faserschicht (10) oder einer anderen Schicht angeklebt werden
oder
die Abstandhalter (30) vor dem Einbringen in die Form mit der Faserschicht (10) oder einer anderen Schicht oder Einlegeteil (5a) oder diesem Teil verbunden werden.

8. Verfahren gemäß einem der vorangegangenen Ansprüche, **dadurch gekennzeichnet, dass** pro 80 cm² des Faserverbundteils (1) zumindest ein Abstandhalter (30, 33-35) verwendet wird und insbesondere pro 10 cm² des Faserverbundteils (1) zumindest ein Abstandhalter (30, 33-35) verwendet wird.

9. Kombination aus einer Faserschicht (10) eines faserverstärkten Materials und einem oder einer Mehrzahl von Abstandhaltern (30) zur Herstellung eines Faserverbundbauteils (1), **dadurch gekennzeichnet, dass** die Faserschicht (10) abzüglich eines einzuspritzenden Kunststoffmaterials eine erste Dichte hat und zumindest zu einer Seite der Faserschicht (10) der eine oder die Mehrzahl von Abstandhaltern (30) angeordnet sind, die sich entweder in einer elastischen Verspannung befinden, wobei die Abstandhalter nach einem Entfernen des Kunststoffmaterials und Lösen der elastischen Verspannung eine Schicht oder Bereiche bilden würden, die eine zweite Dichte aufweist und die zweite Dichte höchstens 25% der ersten Dichte beträgt, oder die Abstandhalter (30) befinden sich gegenüber einem unverformten Zustand erkennbar in einem verformten Zustand, wobei mindestens eine Kompression der Abstandhalter (30) von 40% in Faserverbundteilquerrichtung vorliegt,
wobei die Abstandhalter (30) ein oder mehrere längliche Objekte (32) in der Form von Fäden, Fasern oder Drähten umfassen, wobei diese Objekte (32) entweder radial vorstehende Bereiche aufweisen, die als Abstandhalter (30) dienen, oder wobei diese Objekte eine Verzwirbelung oder eine Verdrehung oder eine Spiralform aufweisen, so dass diese Objekte als Abstandhalter (30) dienen.

## Claims

1. Method for producing a fibre composite part (1), wherein at least one fibre layer (10, 11) and a spacer (30, 33-35) or a plurality of spacers (30, 33-35) are introduced into a cavity of a mould (5, 6, 7), such that the spacers (30, 33-35) provide, in particular adjacent to the fibre layer (10), at least one distributing channel or region (15) for the plastics material to be injected, and the plastics material is injected into the mould (5, 6, 7), and subsequently the cavity of the mould is brought to the dimensions of the fibre composite part, wherein the spacer or spacers (30, 33-35) deform(s) and/or break(s) and plastics material contained in the distributing channel or region (15) flows into the fibre layer (10, 11),
wherein one or more elongate objects (32) in the form of threads, fibres or wires are introduced into the mould (5, 5a, 6, 7), wherein these objects (32) either have radially projecting regions which serve as spacers (30) or wherein these objects have a twisting or a turning or a spiral shape, such that these objects serve as spacers (30).

2. Method according to Claim 1, wherein the mould (5, 6) has a die comprising a plurality of parts that can be moved with respect to one another and, during the injection of the plastics material into the cavity, the mould (5, 6) is in a partially closed state, in which it is closed except for a small residual gap, and, after the injection has ended, the mould (5, 6) moves into the closed position, in which in particular the die cavity corresponds to the fibre composite part (1) to be produced.

3. Method according to Claim 1, wherein provided on one side of the fibre layer (10) is a shaping structure (5a), which is a part of the mould or part of an insert part (5a), and the fibre layer (10, 11) and the spacer or the plurality of spacers (30, 33-35) are arranged in a gap (15) between the shaping structure and a vacuum film (7), and plastics material is injected into the gap (15) and subsequently the spacers (30) are deformed, in particular compressed, by way of a relative excess pressure of the ambient pressure (P2) in relation to the pressure (P1) prevailing in the gap, and thus in particular the plastics material is made to flow to distribute the plastic uniformly.

4. Method according to Claim 3, **characterized in that** a separating layer (40) is used between the spacers and the fibre layer (10).

5. Method according to one of the preceding claims, **characterized in that** the spacers (30) are part of a planar structure, such as in particular a sheet or a film (31), which is three-dimensionally deformed, embossed, punched, deep-drawn and/or cut in such a way that the spacers (30) protrude with respect to a main plane of the planar structure (31) .

6. Method according to one of the preceding claims, **characterized in that** the at least one spacer (30) is of a spiral form, wherein in particular a spiral form is defined such that, over an axial length of the spacer of 3 cm in an elastically non-braced state, the spacer has a radial deflection which corresponds to more than 5 times, preferably 10 times, its diameter and in particular this radial deflection exists in the two radial orientations perpendicular to one another.

7. Method according to one of the preceding claims, **characterized in that** a plurality of individual spacers (30) are introduced into the distributing channel or region (15) and these spacers (30) are either individual or separate bodies, which are placed into the mould and/or adhesively bonded to the fibre layer (10) introduced into the die or to another layer,
or
before being introduced into the mould, the spacers (30) are bonded to the fibre layer (10) or to another layer or insert part (5a) or to this part.

8. Method according to one of the preceding claims, **characterized in that** at least one spacer (30, 33-35) is used per 80 cm² of the fibre composite part (1) and in particular at least one spacer (30, 33-35) is used per 10 cm² of the fibre composite part (1) .

9. Combination of a fibre layer (10) of a fibre-reinforced material and one or a plurality of spacers (30) for producing a fibre composite component (1), **characterized in that** the fibre layer (10), less a plastics material to be injected, has a first density and arranged at least on one side of the fibre layer (10) are the one or the plurality of spacers (30) which are either elastically braced, wherein, after removing the plastics material and releasing the elastic bracing, the spacers would form a layer or regions which have a second density and the second density is at most 25% of the first density, or the spacers (30) are discernibly in a deformed state compared to an undeformed state, wherein at least a compression of the spacers (30) of 40% is in the transverse direction of the fibre composite part, wherein the spacers (30) comprise one or more elongate objects (32) in the form of threads, fibres or wires, wherein these objects (32) either have radially projecting regions which serve as spacers (30) or wherein these objects have a twisting or a turning or a spiral shape, such that these objects serve as spacers (30).

## Revendications

1. Procédé de fabrication d'une pièce composite renforcée par des fibres (1), dans lequel au moins une couche de fibres (10, 11) et un élément d'écartement (30, 33-35) ou une pluralité d'éléments d'écartement (30, 33-35) sont introduits dans une cavité d'un moule (5, 6, 7), de manière à obtenir, au moyen des éléments d'écartement (30, 33-35), en particulier de manière adjacente à la couche de fibres (10), au moins un canal ou une région de distribution (15) pour la matière synthétique à injecter, et la matière synthétique est injectée dans le moule (5, 6, 7), et ensuite la cavité du moule est amenée à la dimension de pièce composite renforcée par des fibres, dans lequel le ou les éléments d'écartement (30, 33-35) se déforme(nt) et/ou se brise(nt) et la matière synthétique contenue dans le canal ou la région de distribution (15) s'écoule dans la couche de fibres (10, 11),
dans lequel un ou plusieurs objets oblongs (32) sous forme de filaments, fibres ou fils sont introduits dans le moule (5, 5a, 6, 7), et soit dans lequel ces objets (32) comprennent des régions faisant saillie radialement qui servent d'éléments d'écartement (30), soit dans lequel ces objets présentent un entortillement ou une torsion ou une forme spiralée, de sorte que ces objets servent d'éléments d'écartement (30) .

2. Procédé selon la revendication 1, dans lequel le moule (5, 6) comprend un outil comportant plusieurs parties déplaçables les unes par rapport aux autres et le moule (5, 6) se trouve dans un état partiellement fermé pendant l'injection de la matière synthétique dans la cavité, état dans lequel il est fermé à un petit interstice résiduel près et le moule (5, 6) est déplacé dans la position fermée une fois l'injection terminée, position fermée dans laquelle la cavité d'outil correspond en particulier à la pièce composite renforcée par des fibres (1) à fabriquer.

3. Procédé selon la revendication 1, dans lequel, d'un côté de la couche de fibres (10), il est prévu une structure de façonnage (5a) qui est une partie du moule ou une partie d'une pièce à insérer (5a) et la couche de fibres (10, 11) et l'élément d'écartement ou la pluralité d'éléments d'écartement (30, 33-35) sont disposés dans un interstice (15) entre la structure de façonnage et un film sous vide (7), et la matière synthétique est injectée dans l'interstice (15) et ensuite, par le biais d'une surpression relative de la pression ambiante (P2) par rapport à la pression (P1) régnant dans l'interstice, les éléments d'écartement (30) se déforment, en particulier se compriment, et ainsi un écoulement de la matière synthétique pour la distribution uniforme de la matière synthétique est produit.

4. Procédé selon la revendication 3, **caractérisé en ce qu'**une couche de séparation (40) est utilisée entre les éléments d'écartement et la couche de fibres (10).

5. Procédé selon l'une des revendications précédentes, **caractérisé en ce que** les éléments d'écartement (30) font partie d'une structure plane, en particulier d'une feuille ou d'un film (31), qui est déformée, gaufrée, estampée, emboutie et/ou découpée de manière tridimensionnelle, de sorte que les éléments d'écartement (30) avancent par rapport à un plan principal de la structure plane (31).

6. Procédé selon l'une des revendications précédentes, **caractérisé en ce que** l'au moins un élément d'écartement (30) est en forme de spirale, en particulier défini en forme de spirale de telle sorte que, sur une longueur axiale de l'élément d'écartement de 3 cm, dans un état non tendu élastiquement, l'élément d'écartement présente une déviation radiale qui correspond à plus de 5 fois, de préférence à 10 fois son diamètre, et en particulier cette déviation radiale existe dans les deux orientations radiales perpendiculaires l'une à l'autre.

7. Procédé selon l'une des revendications précédentes, **caractérisé en ce qu'**une pluralité d'éléments d'écartement individuels (30) sont introduits dans le canal ou la région de distribution (15) et ces éléments d'écartement (30) sont des corps soit individuels soit séparés qui sont insérés dans le moule et/ou collés à la couche de fibres (10) introduite dans l'outil ou à une autre couche
ou
les éléments d'écartement (30) sont, avant l'introduction dans le moule, reliés à la couche de fibres (10) ou à une autre couche ou pièce à insérer (5a) ou à cette pièce.

8. Procédé selon l'une des revendications précédentes, **caractérisé en ce qu'**au moins un élément d'écartement (30, 33-35) est utilisé pour 80 cm² de la pièce composite renforcée par des fibres (1) et en particulier au moins un élément d'écartement (30, 33-35) est utilisé pour 10 cm² de la pièce composite renforcée par des fibres (1).

9. Combinaison d'une couche de fibres (10) d'un matériau renforcé par des fibres et d'un élément d'écartement ou d'une pluralité d'éléments d'écartement (30) pour la fabrication d'une pièce composite renforcée par des fibres (1), **caractérisée en ce que** la couche de fibres (10) présente, déduction faite d'une matière synthétique à injecter, une première masse volumique et, au moins d'un côté de la couche de fibres (10), l'élément d'écartement ou la pluralité d'éléments d'écartement (30) sont disposés, lesquels se trouvent soit sous tension élastique, les éléments d'écartement formeraient, après un retrait de la matière synthétique et un relâchement de la tension élastique, une couche ou des régions qui présentent une deuxième masse volumique et la deuxième masse volumique correspond au maximum à 25 % de la première masse volumique, soit les éléments d'écartement (30) se trouvent dans un état déformé de manière détectable par rapport à un état non déformé, au moins une compression des éléments d'écartement (30) de 40% dans la direction transversale de la pièce composite renforcée par des fibres étant présente,
les éléments d'écartement (30) comportant un ou plusieurs objets oblongs (32) sous forme de filaments, fibres ou fils, et soit ces objets (32) comprennent des régions faisant saillie radialement qui servent d'éléments d'écartement (30), soit ces objets présentent un entortillement ou une torsion ou une forme spiralée, de sorte que ces objets servent d'éléments d'écartement (30).
